# EUROPÄISCHE PATENTSCHRIFT

(11) **EP 3 287 616 B1**
(45) Veröffentlichungstag und Bekanntmachung des Hinweises auf die Patenterteilung: **09.01.2019**
(21) Anmeldenummer: 17187518.0
(22) Anmeldetag: 23.08.2017
(51) Int. Cl.: F01M 1/08, F01M 1/16

(54) **SCHMIERMITTELSYSTEM FÜR KOLBENMASCHINEN**
LUBRICATION SYSTEM FOR PISTON MACHINES
SYSTÈME DE LUBRIFICATION POUR MACHINES À PISTON

(30) Priorität: 25.08.2016 AT 507632016
(43) Veröffentlichungstag der Anmeldung: 28.02.2018
(73) Patentinhaber: Hoerbiger Wien GmbH, 1220 Wien (AT)
(72) Erfinder: Spiegl, Bernhard, 1230 Wien (AT); Kornfeld, Matthias, 2340 Mödling (AT); Gauster, Jonathan, 1200 Wien (AT); Fritz, Bernhard, 1130 Wien (AT)
(74) Vertreter: Patentanwälte Pinter & Weiss OG

(56) Entgegenhaltungen:
- EP-A1- 2 484 875
- EP-A2- 0 049 603
- WO-A2-2012/126473
- DE-A1- 10 149 125
- DE-A1-102014 205 975

## Beschreibung

Die Erfindung betrifft einen Schmiermittelinjektor mit einer Schmiermittelzuleitung und einer Abgabeöffnung, über die ein Schmiermittel in einen zu schmierenden Innenraum einer Kolbenmaschine abgegeben wird, wobei die Abgabeöffnung mittels eines über eine Magnetspule betätigten Nadelventils selektiv öffen- und schließbar ist, wobei der Schmiermittelinjektor einen zur Ermittlung der Menge des über die Abgabeöffnung abgegebenen Schmiermittels geeigneten Durchflusssensor aufweist. Weiters betrifft die Erfindung ein Schmiermittelsystem für eine Kolbenmaschine sowie ein Verfahren zur Bereitstellung von Schmiermittel an einer Vielzahl von Schmierpunkten einer Kolbenmaschine mit einem solchen Schmiermittelsystem.

Bei Kolbenmaschinen, insbesondere bei geschmierten Kompressoren, ist die zuverlässige Schmierung an allen Schmierpunkten von außerordentlicher Bedeutung für den zuverlässigen Betrieb. In der Regel befinden sich in jeder Kompressorpackung und in jedem Zylinder jeweils ein oder mehrere Schmierpunkte welche von einem zentralen Schmiersystem versorgt werden. Die Versorgung der Schmierpunkte erfolgt für Kompressoren gewöhnlich über

"Pump-to-Point" oder "Dividerblock" Systeme. Bei "Pump-to-Point" Systemen wird direkt durch den Kolbenhub des jeweiligen Pumpenelements die entsprechende Ölmenge zum Schmierpunkt gefördert. Beim "Dividerblock" System wird die durch den Kolbenhub einer zentralen Pumpeneinheit geförderte Ölmenge durch einen sogenannten "Dividerblock" aufgeteilt und zu den einzelnen Schmierpunkten gefördert.

Bekannte Schmiermittelsysteme, insbesondere "Pump-to-Point" Systeme, leiden jedoch bei der Einstellung auf geringe Schmiermenge zu hohen Ungenauigkeiten.

Eine verbesserte Regelung der Schmiermittelzufuhr kann durch Schmiermittelsysteme mit einer gemeinsamen, zentral druckgeregelten Ölversorgungsleitung erzielt werden, wobei die Schmiermenge für jeden Schmierpunkt mit einem eigenen Ventil dosiert wird. Ein solches Schmiermittelsystem ist beispielsweise in der EP 0049603 A2 offenbart.

Bei derartigen Systemen ist jedoch neben der druckführenden Schmiermittelzufuhrleitung eine Leckagerückführ- und/oder Überdruckabbauleitung notwendig. Dies führt zu Zuverlässigkeitsproblemen und verhinderte eine exakte, einstellbare und überwachbare Dosierung der Schmiermenge.

WO 2012/126473 A2 offenbart ein Schmiermittelsystem für große Zylinder, wobei über Schmiermittelinjektoren Schmieröl in die Zylinder dosiert wird. Das System weist eine Durchflussmessung für jeden Schmiermittelinjektor auf.

EP 2484875 A1 offenbart ein Schmiermittelsystem für große Zylinder, wobei die Menge des von einem Schmiermittelinjektor abgegebenen Schmieröls über Magnetventile geregelt wird. Um die Dosierung von Viskositätsänderungen unabhängig zu machen werden die Schmiermittelinjektoren mittels Heizelementen beheizt.

Grundsätzlich könnte die Schmiermittelmenge in nahezu allen Kompressoren signifikant reduziert werden, wenn sichergestellt werden könnte, dass die reduzierte Schmiermittelmenge gesichert am Schmierpunkt ankommt. Die Kompressorhersteller legen sich jedoch auf die sichere Seite und liefern die Kompressoren mit hohen Schmierraten aus. Dies führt zu hohen Betriebskosten durch den Schmiermittelverbrauch als auch zu Problemen mit hohen Ölmengen im Gas. Dies ist besonders in Chemieanlagen unerwünscht und das Öl muss aufwändig aus dem Gas entfernt werden. Bei mannlosen Kompressorstationen in Gasfeldern muss Schmieröl mit hohem Aufwand ganzjährig geliefert werden. Bei Verbrennungskraftmaschinen beeinträchtigen zu hohe Schmiermittelmengen unter anderem den Verbrennungsvorgang und führen zu einem höheren Schadstoffanteil.

Eine Reduktion der Schmiermenge wäre daher neben vielen anderen auch aus ökologischen und ökonomischen Gründen wünschenswert. Weiters wäre es wünschenswert, die Schmiermenge individuell für jeden Schmierpunkt an aktuelle Lastbedingungen oder Einlaufprozeduren automatisch anpassen zu können.

Diese und weitere Ziele werden erfindungsgemäß durch einen Schmiermittelinjektor der eingangs genannten Art erreicht, der einen im Strömungsweg entlang der Strömungsrichtung beweglich angeordneten, mit einer gegen die Strömungsrichtung wirkenden Rückstellkraft beaufschlagten Dauermagneten aufweist, wobei außerhalb des Strömungsweges im magnetischen Feld des Dauermagneten zumindest eine mit einer Elektronikeinheit verbundene Messspule angeordnet ist. Die Bewegung des Dauermagneten erzeugt in der Messspule (bzw. den Messspulen) durch elektromagnetische Induktion eine Spannung, die von der Elektronikeinheit zur Ermittlung der Durchflussmenge ausgewertet werden kann. Durch die Messung und Auswertung des Hubs des Dauermagneten ist das Ergebnis weitgehend viskositäts- und damit temperaturunabhängig.

In vorteilhafter Weise kann der Durchflusssensor zwischen der Schmiermittelzuleitung und dem Nadelventil im Strömungsweg des Schmiermittels angeordnet sein, wodurch sich eine platzsparende Anordnung realisieren lässt.

Da das Nadelventil zum Einspritzen von Schmiermittel immer nur sehr kurz geöffnet wird, und der Schmiermittelinjektor zwischen den aktiven Phasen des Einströmens bis zur nächsten aktiven Phase geschossen bzw. inaktiv ist (wobei die dabei bewirkte Strömung in weiterer Folge als "intermittierende Strömung" bezeichnet wird), kann in vorteilhafter Weise als Durchflusssensor ein zur Ermittlung der Menge des intermittierend durch den Strömungsweg strömenden Schmiermittels geeigneter Durchflusssensor sein. Es ist nicht erforderlich, dass der Durchflusssensor statische Strömungsvorgänge messen können muss, was einen einfacheren Aufbau des Durchflusssensors erlaubt.

In vorteilhafter Weise kann die Elektronikeinheit einen Analog/Digital-Wandler aufweisen, der die mit dem Durchflusssensor ermittelten Messdaten in ein digitales Bitmuster umwandelt.

Das digitale Bitmuster kann während der passiven Phasen der Magnetspule über eine für die Magnetspule vorgesehene, vorzugsweise zweidrahtige Stromversorgungsleitung an eine zentrale Steuereinheit eines Schmiermittelsystems übermittelt werden. Durch die Umwandlung in ein digitales Signal wird die Fehleranfälligkeit durch elektromagnetische Interferenzen aus der Umgebung bei der Übermittlung minimiert.

In vorteilhafter Weise kann das Nadelventil durch eine in Schließrichtung wirkende Schließkraft Beaufschlagt sein. Diese Bauart ermöglicht ein sehr schnelles Öffnen und Schließen des Nadelventils wobei das Nadelventil im deaktivierten Zustand geschlossen bleibt.

Eine bevorzugte Ausführungsform sieht vor, dass zwischen dem Durchflusssensor und dem Nadelventil ein Rückschlagventil angeordnet ist. Dadurch werden Fehlmessungen durch den Durchflusssensor vermieden.

In vorteilhafter Weise kann dabei eine Ventilfeder des Rückschlagventils gleichzeitig zur Erzeugung der Schließkraft auf das Nadelventil wirken. Dies ermöglicht einen einfachen Zusammenbau des Schmiermittelinjektors, wobei die Anzahl an Bauteilen minimiert wird.

In vorteilhafter Weise kann das Nadelventil einen in einem elektromagnetischen Feld einer Magnetspule angeordneten Anker aufweisen, wobei die Magnetspule in einem gegenüber dem Schmiermittel abgedichteten Spulenkörper angeordnet ist. Durch die untenstehend beschriebene vorteilhafte Anordnung und Ausbildung von Anker und Spulenkörper kann auf das Vorsehen von Leckagerückführungen verzichtet werden. Dies vereinfacht den Aufbau und erhöht die Genauigkeit der Durchflussmessung.

Dabei kann in vorteilhafter Weise der Spulenkörper ein zum Anker hin offenes Joch aufweisen, wobei in die Öffnung des Jochs ein Spulenträger eingesetzt ist. Das Joch kann dadurch aus einem sehr stabilen Material, vorzugsweise aus einem Metall, insbesondere Stahl, bestehen, um eine passgenaue Fertigung bzw. einen stabilen und abdichtenden Einbau in den Schmiermittelinjektor zu ermöglichen. Gegebenenfalls kann das Joch auch einteilig mit anderen Bauelementen des Schmiermittelinjektors ausgebildet sein. Der Spulenträger besteht vorzugsweise aus einem hochwertigen, gut bearbeitbaren und wärmebeständigen Kunststoff, wie etwa Polyetheretherketon (PEEK).

Bei einer vorteilhaften Ausführungsform kann zwischen Spulenträger und Joch zumindest ein inneres Dichtungselement und ein äußeres Dichtungselement vorgesehen sein. Die Dichtungselemente können vorzugsweise als O-Ringe ausgebildet sein. Dies ermöglicht eine sichere Abdichtung der Magnetspule gegenüber dem Schmiermittel, was einerseits das Vorsehen einer Leckagerückführung erspart und andererseits hinsichtlich des Explosionsschutzes vorteilhaft ist.

Bevorzugter Weise kann der Spulenkörper ringförmig ausgebildet sein, wobei der Strömungsweg durch die Mitte des ringförmigen Spulenkörpers verläuft. Neben einer platzsparenden Anordnung erlaubt dies ein Erwärmen des Schmiermittels im Strömungsweg, indem die Magnetspule während der inaktiven Phasen mit geringer Stromstärke bestromt wird. Die Stromstärke muss dabei so gering sein, dass das Nadelventil noch nicht öffnet. Durch die Erwärmung des Schmiermittels können Viskositätsschwankungen ausgeglichen bzw. vermieden und Anlaufvorgänge verbessert werden.

Andererseits (oder zusätzlich zur Erwärmung über die Magnetspule) können in vorteilhafter Weise im Spulenkörper Heizelemente zur Erwärmung des Schmiermittels vorgesehen sein. Solche Heizelemente können einfache Widerstandselemente oder andere steuerbar Wärme abgebende Elemente sein.

Um die Funktionalität des Schmiermittelinjektors zusätzlich überwachen zu können, kann zur Messung der Schmiermitteltemperatur ein Temperatursensor im Schmiermittelinjektor vorgesehen sein.

In einer weiteren vorteilhaften Ausführungsform kann die Abgabeöffnung eine Strömungsblende ausbilden. Die dadurch erzeugte Blendenströmung weist nur eine geringfügige Abhängigkeit von der Viskosität auf, was durch Viskositätsabweichungen bedingte Fehlerquellen minimiert.

Die Erfindung betrifft weiters ein Schmiermittelsystem für eine Kolbenmaschine mit einer Vielzahl an erfindungsgemäßen Schmiermittelinjektoren wobei das Schmiermittelsystem erfindungsgemäß eine zentrale Druckaufbereitung für ein Schmiermittel und ein mit den Schmiermittelzuleitungen der Schmiermittelinjektoren verbundenes Druckleitungssystem für das Schmiermittel aufweist, und wobei jeder Schmiermittelinjektor über zumindest eine Stromversorgungsleitung mit einer zentralen Steuereinheit verbunden ist. Somit lässt sich die Schmiermenge individuell für jeden Schmierpunkt einstellen und überwachen.

Die Elektronikeinheiten können dabei in vorteilhafter Weise einen Analog/Digital-Wandler aufweisen, der die ermittelten Messdaten zur Übermittlung zur zentralen Steuereinheit in ein digitales Bitmuster umwandelt, wodurch die Übertragungssicherheit erhöht wird.

In einer bevorzugten Ausführungsform können die Elektronikeinheiten der Schmiermittelinjektoren die vorzugsweise zweidrahtige Stromversorgungsleitung des Schmiermittelinjektors während der passiven Phasen des jeweiligen Schmiermittelinjektors als Kommunikationsleitung nutzen, was den Installationsaufwand für das Schmiermittelsystem minimiert.

Weiters betrifft die Erfindung ein Verfahren zur Bereitstellung von Schmiermittel an einer Vielzahl von Schmierpunkten einer Kolbenmaschine mit einem obengenannten Schmiermittelsystem. Erfindungsgemäß kann dabei die zentrale Steuereinheit die Vielzahl an Schmiermittelinjektoren auf Basis der von den Durchflusssensoren erhaltenen Messdaten zur Abgabe einer definierten Schmiermittelmenge zeitlich gesteuert selektiv aktivieren und deaktivieren. Die zeitliche Steuerung erlaubt sowohl die Steuerung des Zeitpunkts der Schmiermittelförderung, als auch der Menge des dabei eingebrachten Schmiermittels für jeden Schmierpunkt unabhängig voneinander.

In vorteilhafter Weise kann die zentrale Steuereinheit bei Detektion einer Fehlfunktion bzw. einer Fehlmenge eines Schmiermittelinjektors die Fehlfunktion bzw. Fehlmenge durch Erhöhung bzw. Verringerung der von zumindest einem anderen Schmiermittelinjektor abgegebenen Schmiermittelmenge ausgleichen. Dadurch werden durch Schmiermängel bedingte Schäden vermieden, die zwischen dem Auftreten einer Störung und der Behebung der Störung bzw. der nächsten Wartung auftreten können. Vorzugsweise kann das System dabei eine Warnung an eine Bedienperson ausgeben wobei auch konkrete Maßnahmen zur Fehlerbehebung vorgeschlagen werden können.

Weiters kann die zentrale Steuereinheit die von jedem Schmiermittelinjektor abgegebene Schmiermenge in Abhängigkeit von aktuellen Lastbedingungen und/oder Einlaufvorgängen individuell anpassen, wodurch sich die Schmiermenge für alle diese Bedingungen optimieren lässt.

In einer vorteilhaften Ausführungsform kann die zentrale Steuereinheit in den Schmiermittelinjektoren enthaltenes Schmiermittel während Stillstandsphasen aktiv erwärmen, insbesondere um Fehler, die sich aus Viskositätsschwankungen ergeben, zu vermeiden.

Die Erwärmung kann dabei über in den Schmiermittelinjektoren vorgesehene Heizelemente erfolgen, oder indem zur Erwärmung eine im Schmiermittelinjektor zur Betätigung eines Nadelventils vorgesehene Magnetspule unterhalb der Aktivierungsschwelle bestromt wird.

Bevorzugter Weises können die Ventilbewegungen in Schmiermittelinjektoren von der zentralen Steuereinheit durch Auswertung der Ankerstromrückwirkung ermittelt und überwacht werden. Dies stellt ein besonders einfaches Verfahren dar, das ohne zusätzliche Sensorelemente implementiert werden kann.

In einer weiteren vorteilhaften Ausführungsform kann die zentrale Steuereinheit die Ventilbewegung jedes Schmiermittelinjektors und/oder die Messdaten der Durchflusssensoren und/oder den zeitlichen Verlauf der Druckspitzen im Druckleitungssystem und/oder weitere Sensordaten des Schmiermittelsystems und/oder der Kolbenmaschine kombiniert auswerten um das Schmierverhalten optimal an die jeweiligen Gegebenheiten anpassen zu können.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 ein Schaltbild eines Schmiermittelsystems für eine Kolbenmaschine;
Fig. 2 zeigt eine schematische Darstellung eines Injektors;
Fig. 3 und 4 zeigen schematische Darstellungen eine Durchflusssensors in mehreren Ausführungsformen;
Fig. 5 zeigt eine Schnittdarstellung eines Injektors; und
Fig. 6 bis 10 zeigen schematische Schnittdarstellungen des Spulenkörpers zur Betätigung des Nadelventils eines Schmiermittelinjektors.

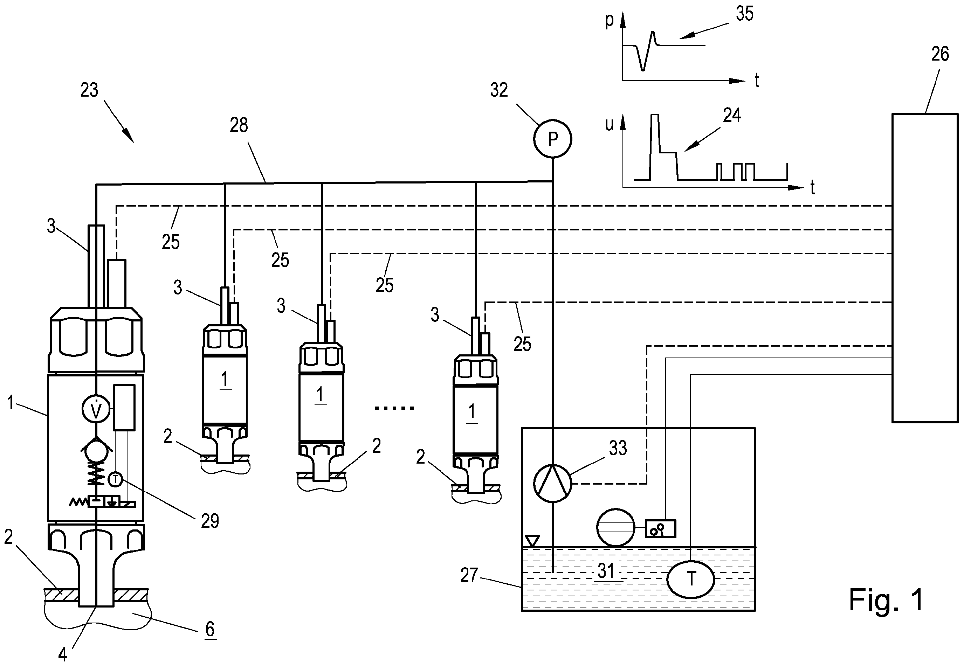

Fig. 1 zeigt ein beispielhaftes erfindungsgemäßes Schmiermittelsystem 23 als schematischer Schaltplan. Das Schmiermittelsystem 23 umfasst eine Vielzahl an Schmiermittelinjektoren 1, die an unterschiedlichen Stellen an einer Kolbenmaschine 2 angeordnet sind, und über eine Abgabeöffnung 4 ein Schmiermittel in einen zu schmierenden Innenraum 6 der Kolbenmaschine 2 abgeben können. Der Innenraum kann beispielsweise der Zylinderraum der Kolbenmaschine 2 oder der Bereich einer Dichtungspackung in einem Gleit- oder Radiallager der Kolbenmaschine 2 sein. Die Bereiche um die Abgabeöffnungen 4 werden allgemein auch als Schmierpunkte bezeichnet.

Eine zentrale Druckaufbereitung 27 versorgt ein Druckleitungssystem 28 mit Schmiermittel aus einem Schmiermittelspeicher 31, baut über eine Versorgungspumpe 33 einen gewünschten und erforderlichen Druck im Druckleitungssystem 28 auf und erhält diesen Aufrecht. Jeder Schmiermittelinjektor 1 weist eine Schmiermittelzuleitung 3 auf, die an das Druckleitungssystem 28 angeschlossen ist.

Der Druck im Druckleitungssystem 28 wird von einer zentralen Steuereinheit 26 über eine Druckmesseinheit 32 gemessen und überwacht, wobei die Regelung der Versorgungspumpe 33 ebenfalls von der zentralen Steuereinheit 26 vorgenommen wird. Über die Druckmesseinheit 32 kann die zentrale Steuereinheit 26 auch Druckschwankungen im Druckleitungssystem 28 ermitteln und auswerten, etwa zur frühzeitigen Erkennung von Fehlfunktionen.

Die zentrale Steuereinheit 26 ist weiters über jeweils eine Stromversorgungsleitung 25 mit jedem Schmiermittelinjektor 1 verbunden. Zum Aktivieren eines Schmiermittelinjektors 1 wird an die entsprechende Stromversorgungsleitung 25 von der zentralen Steuereinheit 26 ein Versorgungsstrom zum Öffnen eines im Schmiermittelinjektor 1 vorgesehenen Nadelventils 5 angelegt. Da bei jeder Aktivierung nur eine geringe Menge an Schmiermittel über die Abgabeöffnung 4 abgegeben werden soll, erfolgt die Aktivierung in Form eines Versorgungsstrompulses, dessen Dauer die jeweilige Abgabemenge bestimmt. Zeitpunkt und Dauer des Versorgungsstrompulses kann von der zentralen Steuereinheit 26 für jeden Schmiermittelinjektor 1 unabhängig von den anderen festgelegt werden.

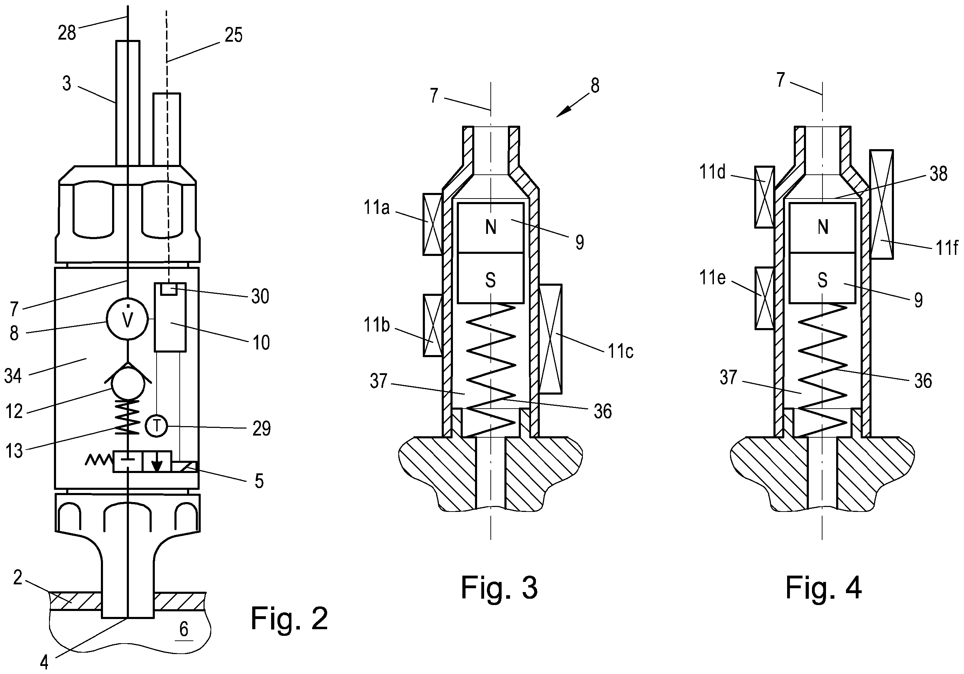

Der Aufbau des Schmiermittelinjektors 1 ist in Fig. 2 schematisch dargestellt. Der Schmiermittelinjektor 1 umfasst ein im Wesentlichen zylindrisches Injektorgehäuse 34, in welchem zwischen der Schmiermittelzuleitung 3, die an das Druckleitungssystem 28 angeschlossen ist, und der Abgabeöffnung 4 ein Strömungsweg 7 für das Schmiermittel definiert ist. In dem Strömungsweg 7 sind ein Durchflusssensor 8, ein Rückschlagventil 12 und das Nadelventil 5 angeordnet. Weiters kann die Temperatur des Schmiermittels an einem geeigneten Punkt im Schmiermittelinjektor 1 mittels eines Temperatursensors 29 gemessen werden. Eine an die Stromversorgungsleitung 25 angeschlossene Elektronikeinheit 10 ist mit dem Durchflusssensor 8, dem Nadelventil 5 und dem Temperatursensor 29 verbunden.

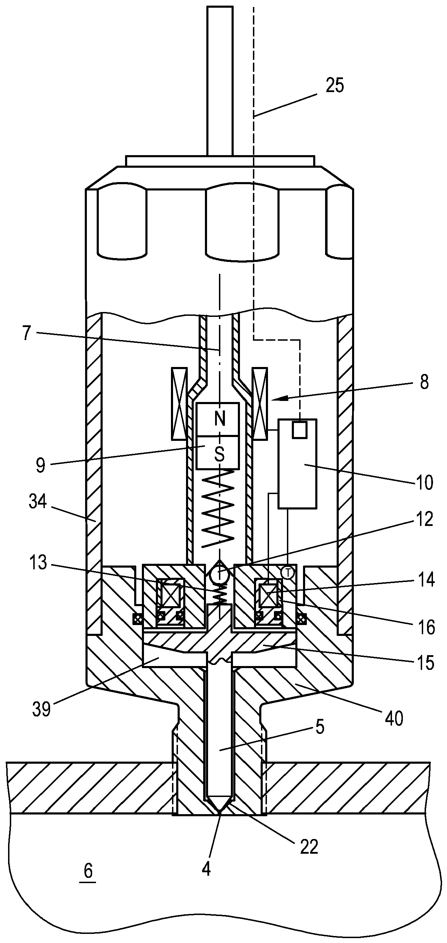

Versorgungsstrompulse, die von der zentralen Steuereinheit 26 an die Stromversorgungsleitung 25 angelegt werden, um das Nadelventil 5 zu aktivieren, werden von der Elektronikeinheit 10 direkt an das elektromagnetische Betätigungselement des Nadelventils 5 weitergegeben, wobei das elektromagnetische Betätigungselement vorzugsweise eine Magnetspule 14 ist, die einen Anker 15 des Nadelventils 5 aktiviert (eine detaillierte Ausführungsform wird untenstehend im Zusammenhang mit der Beschreibung von Fig. 5 erläutert).

Während das Nadelventil 5 aktiviert bzw. geöffnet ist, strömt Schmiermittel aus dem Druckleitungssystem über den Strömungsweg 7 und durch die Abgabeöffnung 4 in den Innenraum 6 der Kolbenmaschine 2, wobei in Fig. 2 von der Kolbenmaschine 2 lediglich eine Außenwandung schematisch dargestellt ist. Die bei jeder Aktivierung abgegebene Menge an Schmiermittel wird vom Durchflusssensor 8 erfasst und von der Elektronikeinheit 10 verarbeitet. Die Elektronikeinheit 10 weist einen Analog/Digital-Wandler 30 auf, mit dem die Messwerte jeder Aktivierung in ein digitales Bitmuster 24 umgewandelt werden. Das digitale Bitmuster 24 wird in der Elektronikeinheit 10 während der aktiven Phase (in der die Stromversorgungsleitung 25 der Versorgung der Magnetspule 14 dient) zwischengespeichert und in der nachfolgenden deaktivierten Phase über die Stromversorgungsleitung 25 an die zentrale Steuereinheit 26 übermittelt. Die zentrale Steuereinheit 26 verfügt damit über ein Feedback der tatsächlich während eines Versorgungsstrompulses abgegebenen Menge an Schmiermittel für jeden Schmiermittelinjektor 1. Auch die von dem Temperartursensor 29 gemessenen Werte können von der Elektronikeinheit 10 in binärer oder analoger Form an die zentrale Steuereinheit 26 übermittelt werden. Auf ähnliche Weise können gegebenenfalls auch Daten, beispielsweise Anweisungen, Kalibrierdaten und/oder Steuerbefehle, von der zentralen Steuereinheit 26 zu den einzelnen Schmiermittelinjektoren 1 übermittelt werden.

Die Verwendung der Stromversorgungsleitung 25 stellt aufgrund der einfachen Verkabelung eine besonders bevorzugte Ausführungsform dar, wobei die Kommunikation zwischen der zentralen Steuereinheit 26 und den Elektronikeinheiten 10 auf über eigene Kommunikationsleitungen oder über drahtlose Verbindungen durchgeführt werden können. Derartige Kommunikationslösungen sind dem Fachmann aus ähnlichen technischen Gebieten, insbesondere auf dem Gebiet der Kompressor- und Motortechnik, bekannt.

Die zentrale Steuereinheit 26 (Fig. 1) verfügt somit über detaillierte, genaue und aktuelle Informationen über die von jedem Schmiermittelinjektor 1 abgegebene Schmiermittelmenge, über die Temperaturbedingungen in den einzelnen Schmiermittelinjektoren 1 und über den von der Druckmesseinheit 32 gemessenen Druckverlauf 35 im Druckleitungssystem 27.

Der Druck im Druckleitungssystem 27 weist bei jedem einzelnen Schmiervorgang eines Schmiermittelinjektors 1 einen charakteristischen Druckverlauf 35 auf, der im Allgemeinen von einem mit dem Öffnen des Nadelventils 5 einhergehenden Druckabfall, gefolgt von einem durch das Schließen des Nadelventils ausgelösten kurzzeitigen Druckanstieg gekennzeichnet ist.

Die Temperaturmessung im Schmiermittelinjektor 1 ermöglicht neben einer erhöhten Explosionssicherheit auch eine Berücksichtigung von Viskositätsänderungen, beispielsweise durch eine Kompensation solcher Viskositätsschwankungen oder durch gezielte Maßnahmen zur Beeinflussung der Viskosität des Schmiermittels, wie etwa eine Vorwärmung des Schmiermittels im Strömungsweg 7 des Schmiermittelinjektors 1, beispielsweise durch im Schmiermittelinjektor 1 angeordnete Heizelemente oder durch ein geringfügiges Bestromen der Magnetspule 11 während der inaktiven Phase, sodass diese sich zwar erwärmt, aber das Nadelventil 5 noch nicht öffnet.

Während der aktiven Phase kann die zentrale Steuereinheit 26 weiters die Ankerstromrückwirkung des im Magnetfeld der Magnetspule 11 bewegten Ankers auswerten, wodurch genaue Daten über die Bewegung des Nadelventils 5 in jedem Schmiermittelinjektor 1 generiert werden können.

Durch eine logische Verknüpfung der Daten über die abgegebene Schmiermittelmenge an jeder Schmierstelle, die Injektornadelbewegung jedes Schmiermittelinjektor 1, die Schmiermitteltemperatur in jedem Schmiermittelinjektor 1 und/oder der Druckspitzen im Druckleitungssystem kann auf verschiedene Fehlermodi wie z.B. eine blockierte Ölversorgungsleitung, Ausfall einzelner Schmiermittelinjektoren 1, etc. geschlossen werden.

Diese Fehlerdetektion ermöglicht weiters ein automatisches adaptives Steuerungsverhalten, welches zu einer Erhöhung der Zuverlässigkeit und Sicherheit des Gesamtsystems führt. So kann z.B. bei Detektion eines ausgefallenen Schmiermittelinjektor 1 auf einem Zylinder mit mehreren Schmierpunkten die Aufgabe des ausgefallenen Schmiermittelinjektors 1 durch die verbleibenden Schmiermittelinjektor 1 durch adaptives Anpassen der injizierten Schmiermittelmenge der verbleibenden Schmiermittelinjektoren 1 ausgeglichen werden.

Ein vorteilhafter Durchflusssensor 8, der im Schmiermittelinjektor 1 verwendet werden kann, ist in Fig. 3 und 4 in mehreren Ausführungsformen beispielhaft dargestellt.

In einem erweiterten Bereich 37 des Strömungswegs 7 ist ein Dauermagnet 9 längs zur Strömungsrichtung verschiebbar angeordnet. Der Dauermagnet 9 wird von einer Rückstellfeder 36 gegen eine durch einen Anschlag 38 definierte Endposition gedrückt, in welcher der Dauermagnet 9 den Strömungsweg 7 verschließt. Bei Auftreten einer Strömung wird der Dauermagnet 9 gegen die Rückstellkraft der Rückstellfeder 36 von dem Anschlag 38 weg gedrückt, sodass das Schmiermittel seitlich an den Dauermagneten 9 vorbei strömen kann. Sobald kein Schmiermittel mehr durch den Strömungsweg 7 strömt, wird der Dauermagnet 9 von der Rückstellfeder 36 wieder in die Endposition gedrückt.

Die Bewegung des Dauermagneten 9 kann mithilfe einer oder mehrerer Messspulen 11, die mit der Elektronikeinheit 10 verbunden sind, anhand der in die Messspule(n) 11 induzierten Spannung ermittelt werden. In Fig. 3 und 4 sind mehrere unterschiedliche Möglichkeiten dargestellt, wie die Messspulen 11 angeordnet werden können (wobei die einzelnen Positionen in Fig. 3 und 4 mit den Bezugszeichen 11a-11f gekennzeichnet sind), um die Bewegung zu messen, wobei in jeder Figur auf der rechten und der linken Hälfte jeweils zwei unterschiedliche Ausführungsformen dargestellt sind. Somit zeigen die Fig. 3 und 4 vier unterschiedliche Ausführungsformen.

Die Darstellung auf der linken Seite der Fig. 3 zeigt zwei Messspulen 11a und 11b, wobei die erste Messspule 11a im Bereich der Endposition des Dauermagneten 9 um den erweiterten Bereich 37 herum angeordnet ist und die zweite Messspule 11b unterhalb des Dauermagneten in einem Bereich angeordnet ist, in den sich der Dauermagnet 9 erst bewegt, wenn eine Strömung des Schmiermittels auftritt.

Die Darstellung auf der rechten Seite der Fig. 3 zeigt eine einzige Spule 11c, die leicht überlappend mit dem Dauermagneten 9 angeordnet ist und einen Bereich umfasst, in den der Dauermagnet 9 bei Auftreten einer Strömung gedrückt wird.

Fig. 4 zeigt auf der linken Seite eine Anordnung mit zwei Messspulen 11d und 11e, die jedoch im Unterschied zur linken Seite von Fig. 3 beide überlappend mit dem Dauermagneten angeordnet sind, und auf der rechten Seite von Fig. 4 ist eine Anordnung einer einzigen Magnetspule 11f im Bereich der Endposition des Dauermagneten dargestellt, wobei sich der Dauermagnet 9 bei Auftreten einer Strömung aus dem von der Messspule 11f umfassten Bereich heraus bewegt.

In jedem Fall kann die Bewegung des Dauermagneten 9 über die Messspule(n) 11 genau gemessen und zur Ermittlung der Strömungsmenge des Schmiermittels bei jedem Strömungspuls ausgewertet werden.

Die oben dargelegte Durchflussmessung ist in dieser Form nur für dynamische Strömungsverläufe geeignet, also insbesondere für intermittierende Flüssigkeitsströme, wie sie im gegenständlichen Fall bei jedem Öffnen des Nadelventils 5 auftreten. Da während einer aktiven Phase immer nur eine geringe Menge an Schmiermittel über den Schmiermittelinjektor 1 abgegeben wird, kann sich für den Dauermagneten 9 auch keine stabile Lage außerhalb der Endlage einstellen, dies wäre nur bei stetigen Strömungen der Fall.

Fig. 5 zeigt eine Querschnittsansicht einer erfindungsgemäßen Ausführungsform des Schmiermittelinjektors 1, wobei auf die bereits obenstehend beschriebenen Merkmale nicht nochmals detailliert eingegangen wird. Die im Folgenden beschriebenen Merkmale sind von der Ausführungsform des Durchflusssensors unabhängig und können auch in Schmiermittelinjektoren verwendet werden, die keinen Durchflusssensor aufweisen, oder deren Durchflusssensor sich von der oben beschriebenen Ausführungsform unterscheidet.

Der Strömungsweg 7 erstreckt sich im Wesentlichen entlang der Hauptachse des zylindrischen Injektorgehäuses 34, wobei stromabwärts des Durchflusssensors 8 das Rückschlagventil 12 angeordnet ist. Das Rückschlagventil 12 ist in an sich bekannter Weise als Kugelkörper ausgebildet, der von einer Ventilfeder 13 gegen die Strömungsrichtung auf einen Ventilsitz gedrückt wird.

Etwa im Bereich des Rückschlagventils 12 ist um den Strömungsweg 7 herum ein Spulenkörper 16 angeordnet, in dem die Magnetspule 14 für das Nadelventil 5 untergebracht ist. Unterhalb des Spulenkörpers befindet sich ein Ankerraum 39, in dem ein mit dem Nadelventil 5 verbundener, als Scheibe bzw. Platte ausgebildeter Anker 15 angeordnet ist. Der Anker 15, und damit das Nadelventil 5, wird von der Ventilfeder 13 von dem Spulenkörper 16 weg in die Schließstellung gedrückt. Als Ventilfeder 13 wird dieselbe Feder verwendet, die auch die entgegengesetzte Rückstellkraft für das Rückschlagventil 12 bereitstellt. Die Ventilfeder 13 wirkt somit in beiden Richtungen sowohl auf das Rückschlagventil 12, als auch auf das Nadelventil 5.

Wenn die Magnetspule 14 von einem ausreichend großen Versorgungsstrom durchflossen wird, wird dadurch der Anker 15 gegen die Federkraft der Ventilfeder 13 von der Magnetspule 14 angezogen und das mit dem Anker 15 verbundene Nadelventil 5 hebt vom Ventilsitz, der im Bereich der Abgabeöffnung 4 angeordnet ist, ab und gibt die Abgabeöffnung 4 frei, sodass Schmiermittel aus dem Strömungsweg 7 in den Innenraum 6 der Kolbenmaschine 2 strömen kann.

Der Ventilsitz des Nadelventils ist dabei als Strömungsblende 22 ausgebildet, wobei der Strömungsdurchmesser von einem verhältnismäßig großen Durchmesser im Bereich um das Nadelventil 5 stufenartig auf einen verhältnismäßig kleinen Durchmesser im Bereich der Abgabeöffnung 4 verengt wird. Der dadurch erzeuge Druckabfall im Bereich der Strömungsblende 22 bewirkt eine Blendenströmung, die nur in geringem Maß von der Viskosität abhängig ist. Dadurch wird die Viskositätsunabhängigkeit verbessert.

Der Spulenkörper 16 und das Nadelventil 5 mit dem Anker 15 sind in einem Teil des Injektorgehäuses 34 angeordnet, der als Einbaustutzen 40 ausgebildet ist, und mit dem der Schmiermittelinjektor 1 in einer zu diesem Zweck an der Kolbenmaschine 2 vorgesehenen Montageöffnung montiert ist. Der Spulenkörper 16 ist gegenüber dem Einbaustutzen 40 abgedichtet, sodass das unterhalb des Spulenkörpers 16 um den Anker 15 strömende Schmiermittel nicht in den Bereich oberhalb des Spulenkörpers 16 eindringen kann. Dieser Bereich im Inneren des Injektorgehäuses 34 oberhalb des Spulenkörpers 16 ist daher frei von Schmiermittel und bietet Platz, um die Elektronikeinheit 10 geschützt im Injektorgehäuse 34 anzuordnen.

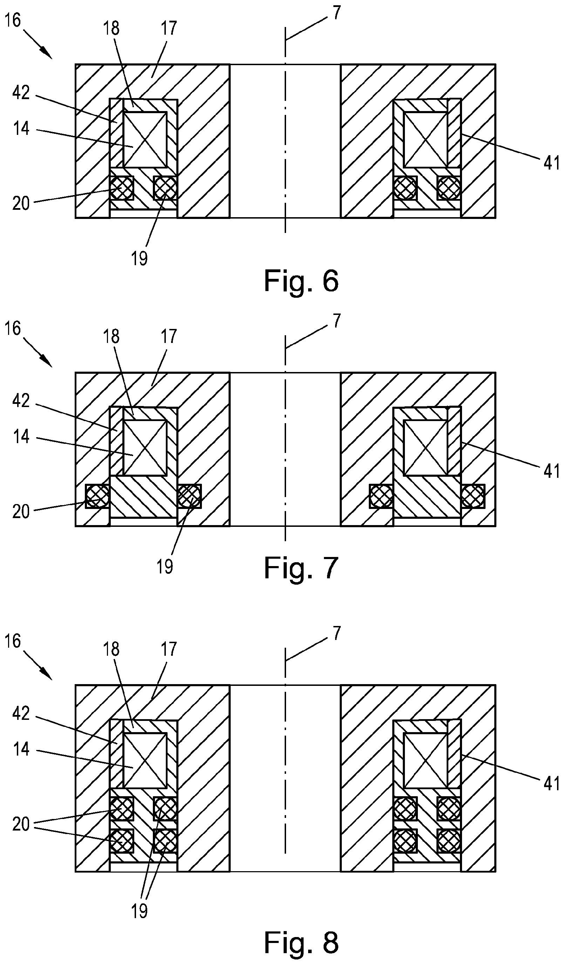

Fig. 6 bis 10 zeigen bevorzugte Ausführungsformen des Spulenkörpers 16. Dieser weist allgemein ein im Wesentlichen ringförmiges Joch 17 auf, das um den Strömungsweg 7 herum angeordnet ist. Das Joch besteht vorzugsweise aus einem festen Werkstoff, wie etwa Stahl, und ist gegenüber den angrenzenden Bauteilen (etwa der Außenwandung des Strömungswegs 7 an der Innenseite und dem Einbaustutzen 40 bzw. dem Injektorgehäuse 34 an der Außenseite - vgl. Fig. 5) abdichtend eingebaut. Gegebenenfalls kann das Joch 17 einteilig mit der Leitung, die den Strömungsweg 7 definiert, oder einteilig mit dem Gehäuse ausgebildet sein.

An der dem Anker 15 zugewandten Unterseite des Jochs 17 ist eine Aufnahmenut 41 eingebracht, in die ein Spulenträger 18 eingesetzt ist. Der Spulenträger 18 besteht vorzugsweise aus einem geeigneten Kunststoffmaterial, wie etwa PEEK. Auf dem Spulenträger 18 ist die Magnetspule 14 angeordnet, wobei die offene Seite der Spulenwicklung der Magnetspule 14 durch einen Schutzring, vorzugsweise aus demselben oder einem anderen Kunststoff, geschützt ist.

Um die Magnetspule 14 gegen ein Eindringen von Schmiermittel zu sichern, sind zumindest ein inneres Dichtungselement 19 und ein äußeres Dichtungselement 20 zwischen dem Spulenträger 18 und dem Joch 17 angeordnet, wobei in vorteilhafter Weise einfache O-Ringe verwendet werden können, die in entsprechende Sichtungsnuten eingesetzt sind.

Durch diesen einfachen Aufbau kann das Eindringen von Schmiermittel in den Spulenträger 18 zuverlässig verhindert werden, wodurch eine Zertifizierung gemäß einschlägiger Explosionssicherheitsnormen möglich ist, ohne dass die Magnetspule 14 in herkömmlicher Weise aufwendig in Kunststoff eingegossen werden muss.

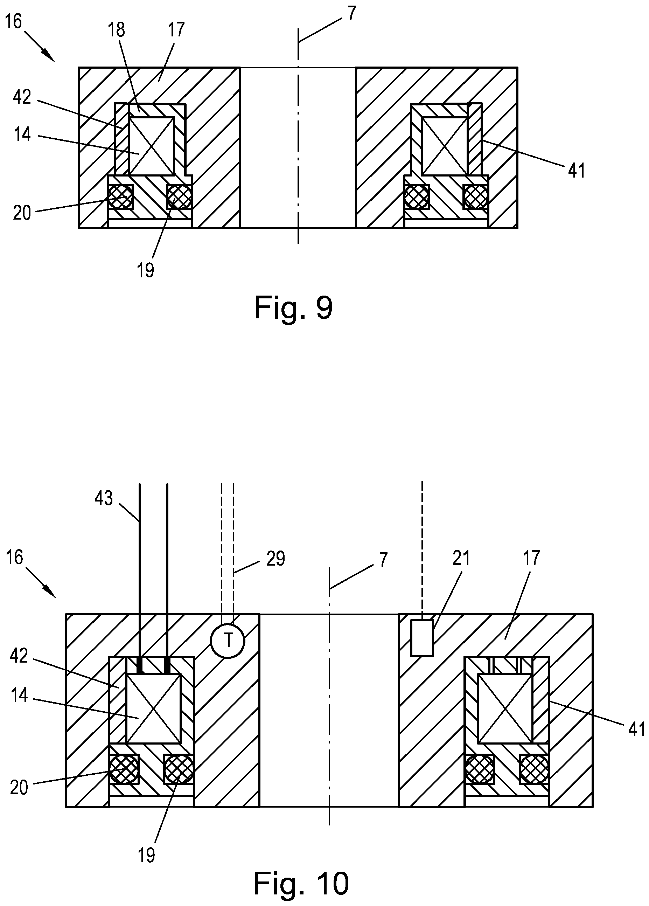

Die Dichtungselemente 19, 20 können unterschiedlich angeordnet werden. Fig. 6 zeigt zwei O-Ring-Dichtungselemente 19, 20, die in außen und innen am Spulenträger 18 eingebrachte Dichtungsnuten eingelegt sind. Die Dichtungsnuten können jedoch auch im Joch 17 vorgesehen sein, wie in Fig. 7 dargestellt. Fig. 8 zeigt eine Ausführungsform mit vier O-Ring-Dichtungselementen, wobei außen und innen am Spulenträger 18 jeweils zwei Dichtungsnuten vorgesehen sind. Fig. 9 zeigt eine Ausführungsform mit einer stufig ausgebildeten Aufnahmenut 41.

Fig. 10 zeigt einen Spulenkörper 16 gemäß Fig. 6, wobei die Zuleitungen 43 zu der Magnetspule 14 dargestellt sind. Die Zuleitungen 43 sind durch eine Bohrung im Joch 17 zur Elektronikeinheit 10 geführt.

Weiters sind in Fig. 10 ein Temperatursensor 29 und ein Heizelement 21 im Bereich der dem Strömungsweg 7 naheliegenden Innenseite des Jochs 17 angeordnet.

### Bezugszeichen:

Schmiermittelinjektor 1
Kolbenmaschine 2
Schmiermittelzuleitung 3
Abgabeöffnung 4
Nadelventil 5
Innenraum 6
Strömungsweg 7
Durchflusssensor 8
Dauermagnet 9
Elektronikeinheit 10
Messspule 11
Rückschlagventil 12
Ventilfeder 13
Magnetspule 14
Anker 15
Spulenkörper 16
Joch 17
Spulenträger 18
inneres Dichtungselement 19
äußeres Dichtungselement 20
Heizelemente 21
Strömungsblende 22
Schmiermittelsystem 23
digitales Bitmuster 24
Stromversorgungsleitung 25
zentrale Steuereinheit 26
zentrale Druckaufbereitung 27
Druckleitungssystem 28
Temperatursensor 29
Analog/Digital-Wandler 30
Schmiermittelspeicher 31
Druckmesseinheit 32
Versorgungspumpe 33
Injektorgehäuse 34
Druckverlauf 35
Rückstellfeder 36
erweiterter Bereich 37
Anschlag 38
Ankerraum 39
Einbaustutzen 40
Aufnahmenut 41
Schutzring 42
Zuleitungen 43

## Patentansprüche

1. Schmiermittelinjektor (1) mit einer Schmiermittelzuleitung (3) und einer Abgabeöffnung (4), über die ein Schmiermittel in einen zu schmierenden Innenraum (6) einer Kolbenmaschine (2) abgegeben wird, wobei die Abgabeöffnung (4) mittels eines über eine Magnetspule (14) betätigten Nadelventils (5) selektiv offen- und schließbar ist, wobei der Schmiermittelinjektor (1) einen zur Ermittlung der Menge des über die Abgabeöffnung (4) abgegebenen Schmiermittels geeigneten Durchflusssensor (8) aufweist, **dadurch gekennzeichnet, dass** der Durchflusssensor (8) einen im Strömungsweg (7) entlang der Strömungsrichtung beweglich angeordneten, mit einer gegen die Strömungsrichtung wirkenden Rückstellkraft beaufschlagten Dauermagneten (9) aufweist, wobei außerhalb des Strömungsweges im magnetischen Feld des Dauermagneten zumindest eine mit einer Elektronikeinheit (10) verbundene Messspule (11) angeordnet ist.

2. Schmiermittelinjektor (1) nach Anspruch 1, **dadurch gekennzeichnet, dass** der Durchflusssensor (8) ein zur Ermittlung der Menge des intermittierend durch den Strömungsweg (7) strömenden Schmiermittels geeigneter Durchflusssensor (8) ist.

3. Schmiermittelinjektor (1) nach Anspruch 1 oder 2, **dadurch gekennzeichnet, dass** die Elektronikeinheit (10) einen Analog/Digital-Wandler (30) aufweist, der die mit dem Durchflusssensor (8) ermittelten Messdaten in ein digitales Bitmuster (24) umwandelt, welches während der passiven Phasen der Magnetspule (14) über eine für die Magnetspule (14) vorgesehene, vorzugsweise zweidrahtige Stromversorgungsleitung (25) an eine zentrale Steuereinheit (26) eines Schmiermittelsystems (23) übermittelt werden kann.

4. Schmiermittelinjektor (1) nach einem der Ansprüche 1 bis 3, **dadurch gekennzeichnet, dass** das Nadelventil (5) durch eine in Schließrichtung wirkende Schließkraft Beaufschlagt ist.

5. Schmiermittelinjektor (1) nach einem der Ansprüche 1 bis 4, **dadurch gekennzeichnet, dass** zwischen dem Durchflusssensor (8) und dem Nadelventil (5) ein Rückschlagventil (12) angeordnet ist, wobei vorzugsweise eine Ventilfeder (13) des Rückschlagventils (12) gleichzeitig zur Erzeugung der Schließkraft auf das Nadelventil (5) wirkt.

6. Schmiermittelinjektor (1) nach einem der Ansprüche 1 bis 5, **dadurch gekennzeichnet, dass** das Nadelventil (5) einen in einem elektromagnetischen Feld einer Magnetspule (14) angeordneten Anker (15) aufweist, wobei die Magnetspule (14) in einem gegenüber dem Schmiermittel abgedichteten Spulenkörper (16) angeordnet ist, der vorzugsweise ein zum Anker (15) hin offenes Joch (17) aufweist, wobei in die Öffnung des Jochs (17) ein Spulenträger (18) eingesetzt ist.

7. Schmiermittelinjektor (1) nach Anspruch 6, **dadurch gekennzeichnet, dass** zwischen Spulenträger (18) und Joch (17) zumindest ein inneres Dichtungselement (19) und ein äußeres Dichtungselement (20) vorgesehen sind, wobei die Dichtungselemente (19, 20) vorzugsweise als O-Ringe ausgebildet sind.

8. Schmiermittelinjektor (1) nach einem der Ansprüche 6 bis 7, **dadurch gekennzeichnet, dass** der Spulenkörper (16) ringförmig ausgebildet ist, wobei der Strömungsweg (7) durch die Mitte des ringförmigen Spulenkörpers (16) verläuft.

9. Schmiermittelinjektor (1) nach einem der Ansprüche 6 bis 8, **dadurch gekennzeichnet, dass** im Spulenkörper (16) Heizelemente (21) zur Erwärmung des Schmiermittels vorgesehen sind.

10. Schmiermittelinjektor (1) nach einem der Ansprüche 1 bis 9, **dadurch gekennzeichnet, dass** zur Messung der Schmiermitteltemperatur ein Temperatursensor (29) im Schmiermittelinjektor (1) vorgesehen ist.

11. Schmiermittelinjektor (1) nach einem der Ansprüche 1 bis 10, **dadurch gekennzeichnet, dass** die Abgabeöffnung (4) eine Strömungsblende (22) ausbildet.

12. Schmiermittelsystem (23) für eine Kolbenmaschine (2) mit einer Vielzahl an Schmiermittelinjektoren (1) gemäß einem der Ansprüche 1 bis 11, wobei das Schmiermittelsystem (23) eine zentrale Druckaufbereitung (27) für ein Schmiermittel und ein mit den Schmiermittelzuleitungen (3) der Schmiermittelinjektoren (1) verbundenes Druckleitungssystem (28) für das Schmiermittel aufweist, und wobei jeder Schmiermittelinjektor (1) über zumindest eine Stromversorgungsleitung (25) mit einer zentralen Steuereinheit (26) verbunden ist.

13. Schmiermittelsystem (23) nach Anspruch 12, **dadurch gekennzeichnet, dass** die Elektronikeinheiten (10) einen Analog/Digital-Wandler (30) aufweist, der die ermittelten Messdaten zur Übermittlung zur zentralen Steuereinheit (26) in ein digitales Bitmuster (24) umwandelt.

14. Schmiermittelsystem (23) nach Anspruch 13, **dadurch gekennzeichnet, dass**, die Elektronikeinheiten (10) der Schmiermittelinjektoren (1) die vorzugsweise zweidrahtige Stromversorgungsleitung (25) des Schmiermittelinjektors (1) während der passiven Phasen des jeweiligen Schmiermittelinjektors (1) als Kommunikationsleitung nutzen.

15. Verfahren zur Bereitstellung von Schmiermittel an einer Vielzahl von Schmierpunkten einer Kolbenmaschine (2) mit einem Schmiermittelsystem gemäß einem der Ansprüche 12 bis 14, **dadurch gekennzeichnet, dass** die zentrale Steuereinheit (26) die Vielzahl an Schmiermittelinjektoren (1) auf Basis der von den Durchflusssensoren (8) erhaltenen Messdaten zur Abgabe einer definierten Schmiermittelmenge zeitlich gesteuert selektiv aktiviert und deaktiviert.

16. Verfahren nach Anspruch 15, **dadurch gekennzeichnet, dass** die zentrale Steuereinheit (26) bei Detektion einer Fehlfunktion bzw. einer Fehlmenge eines Schmiermittelinjektors (1) die Fehlfunktion bzw. Fehlmenge durch Erhöhung bzw. Verringerung der von zumindest einem anderen Schmiermittelinjektor (1) abgegebenen Schmiermittelmenge ausgleicht.

17. Verfahren nach Anspruch 15 oder 16, **dadurch gekennzeichnet, dass** die zentrale Steuereinheit (26) die von jedem Schmiermittelinjektor (1) abgegebene Schmiermenge in Abhängigkeit von aktuellen Lastbedingungen und/oder Einlaufvorgängen individuell anpasst.

18. Verfahren nach einem der Ansprüche 15 bis 17, **dadurch gekennzeichnet, dass** die zentrale Steuereinheit (26) in den Schmiermittelinjektoren (1) enthaltenes Schmiermittel während Stillstandsphasen aktiv erwärmt.

19. Verfahren nach Anspruch 18, **dadurch gekennzeichnet, dass** die Erwärmung über in den Schmiermittelinjektoren (1) vorgesehene Heizelemente (21) erfolgt und/oder, dass zur Erwärmung eine im Schmiermittelinjektor (1) zur Betätigung eines Nadelventils (5) vorgesehene Magnetspule (14) unterhalb der Aktivierungsschwelle bestromt wird.

20. Verfahren nach einem der Ansprüche 15 bis 19, **dadurch gekennzeichnet, dass** die Ventilbewegungen in Schmiermittelinjektoren (1) von der zentralen Steuereinheit (26) durch Auswertung der Ankerstromrückwirkung ermittelt und überwacht werden, wobei die zentrale Steuereinheit (26) vorzugsweise die Ventilbewegung jedes Schmiermittelinjektors (1) und/oder die Messdaten der Durchflusssensoren (8) und/oder den zeitlichen Verlauf der Druckspitzen im Druckleitungssystem (28) und/oder weitere Sensordaten des Schmiermittelsystems und/oder der Kolbenmaschine kombiniert auswertet.

## Claims

1. A lubricant injector (1) with a lubricant inlet conduit (3) and an outlet opening (4), through which a lubricant is delivered into the inner space (6) to be lubricated of a piston machine (2), wherein the outlet opening (4) may be selectively opened and closed by means of a needle valve (5), which is actuated by a magnetic coil (14), wherein the lubricant injector (1) has a flow sensor (8) suitable for determining the quantity of lubricant delivered through the outlet opening (4), **characterized in that** the flow sensor (8) has a permanent magnet (9), which is positioned in the flow path (7) and which is movable along the flow direction, and which is subject to a restoring force, which acts against the flow direction, wherein at least one measuring coil (11), which is connected to an electronic unit (10), is positioned outside the flow path, in the magnetic field of the permanent magnet.

2. The lubricant injector (1) of claim 1, **characterized in that** the flow sensor (8) is a flow sensor (8), which is suitable for determining the quantity of lubricant intermittently flowing through the flow path (7).

3. The lubricant injector (1) of claim 1 or 2, **characterized in that** the electronic unit (10) has an analog/digital converter (30), which converts measurement data determined by the flow sensor (8) into a digital bit pattern (24), which may be transmitted during the passive phases of the magnet coil (14) through a power supply line (25), preferably of the two-wire type, provided for the magnet coil (14), to a central control unit (26) of a lubrication system (23).

4. The lubricant injector (1) of any of claims 1 to 3, **characterized in that** the needle valve (5) is subjected to a closing force acting in the closing direction.

5. The lubricant injector (1) of any of claims 1 to 4, **characterized in that** a check valve (12) is positioned between the flow sensor (8) and the needle valve (5), wherein preferably a valve spring (13) of the check valve (12) simultaneously engages the needle valve (5) for generating the closing force.

6. The lubricant injector (1) of any of claims 1 to 5, **characterized in that** the needle valve (5) is provided with an armature (15), which is positioned inside an electromagnetic field of a magnet coil (14), wherein the magnet coil (14) is positioned in a coil body (16), which is sealed with respect to the lubricant, wherein the coil body (16) preferably has a yoke (17), which opens towards the armature (15), wherein a coil support (18) is inserted into the opening of the yoke (17).

7. The lubricant injector of claim 6, **characterized in that** at least one inner sealing element (19) and one outer sealing element (20) are provided between the coil support (18) and the yoke (17), wherein the sealing elements (19, 20) are preferably O-rings.

8. The lubricant injector (1) of any of claims 6 to 7, **characterized in that** the coil body (16) has an annular shape, wherein the flow path (7) extends through the center of the annular coil body (16).

9. The lubricant injector (1) of any of claims 6 to 8, **characterized in that** heating elements (21) for heating the lubricant are provided inside the coil body (16).

10. The lubricant injector (1) of any of claims 1 to 9, **characterized in that** a temperature sensor (29) for measuring the temperature of the lubricant is provided inside the lubricant injector (1).

11. The lubricant injector (1) of any of claims 1 to 10, **characterized in that** the outlet opening (4) forms a flow screen (22).

12. A lubrication system (23) for a piston machine (2) with a plurality of lubricant injectors (1) of any of claims 1 to 11, wherein the lubrication system (23) has a central pressure supply (27) for a lubricant and a pressure conduit system (28) for the lubricant, which is connected to the lubricant inlet conduits (3) of the lubricant injectors (1), and wherein each lubricant injector (1) is connected through at least one power supply line (25) to a central control unit (26).

13. The lubrication system (23) of claim 12, **characterized in that** the electronic units (10) have an analog/digital converter (30), which converts the determined measurement data into a digital bit pattern (24) for transmission to the central control unit (26).

14. The lubrication system (23) of claim 13, **characterized in that** the electronic units (10) of the lubricant injectors (1) use the preferably two-wire power supply line (25) of the lubricant injectors (1) as a communication line during passive phases of the respective lubricant injector (1).

15. A method for providing lubricant to a plurality of lubrication points of a piston machine (2) with a lubrication system of any of claims 12 to 14, **characterized in that** the central control unit (26) selectively activates and deactivates, in a time-controlled way, the plurality of lubricant injectors (1), based on the measurement data obtained from the flow sensors (8), for delivering a defined quantity of lubricant.

16. The method of claim 15, **characterized in that**, in case of detection of a malfunction or of an incorrect quantity delivered by one of the lubricant injectors (1), the central control unit (26) compensates said malfunction or incorrect quantity by increasing or reducing the quantity of lubricant delivered by at least another one of the lubricant injectors (1).

17. The method of claim 15 or 16, **characterized in that** the central control unit (26) individually adjusts the quantity of lubricant delivered by each lubricant injector (1) depending on the current load condition and/or run-in processes.

18. The method of any of claims 15 to 17, **characterized in that** the central control unit (26) actively heats the lubricant contained in the lubricant injectors (1) during the inactive phases.

19. The method of claim 18, **characterized in that** the heating is provided by heating elements (21), which are provided in the lubricant injectors (1) and/or **in that**, for heating, a magnet coil (14) provided in the lubricant injector (1) for actuating the needle valve (5) is supplied with a current, which lies below the activation threshold.

20. The method of any of claims 15 to 19, **characterized in that** the movements of valves inside the lubricant injectors (1) are detected and monitored by the central control unit (26) through evaluation of the armature current reaction, wherein the central control unit (26) preferably evaluates, in combination, the valve movement of each lubricant injector (1) and/or measurement data provided by the flow sensors (8) and/or the temporal variation of pressure peaks in the pressure conduit system (28) and/or further sensor data of the lubrication system and/or of the piston machine.

## Revendications

1. Injecteur de lubrifiant (1) avec une conduite d'amenée de lubrifiant (3) et une ouverture de distribution (4) par le biais de laquelle un lubrifiant peut être distribué dans un espace intérieur (6) à lubrifier d'une machine à piston (2), dans lequel l'ouverture de distribution (4) peut être ouverte et fermée de façon sélective au moyen d'une soupape à pointeau (5) actionnée par le biais d'une bobine magnétique (14), l'injecteur de lubrifiant (1) comportant un capteur de débit (8) approprié pour déterminer la qualité du lubrifiant distribué par le biais de l'ouverture de distribution (4), **caractérisé en ce que** le capteur de débit (8) comporte un aimant permanent (9) disposé de façon mobile sur le trajet d'écoulement (7) le long de la direction d'écoulement et soumis à une force de rappel agissant à l'inverse de la direction d'écoulement, au moins une bobine de mesure (11) raccordée à une unité électronique (10) étant disposée à l'extérieur du trajet d'écoulement dans le champ magnétique de l'aimant permanent.

2. Injecteur de lubrifiant (1) selon la revendication 1, **caractérisé en ce que** le capteur de débit (8) est un capteur de débit (8) approprié pour déterminer la qualité du lubrifiant s'écoulant de façon intermittente à travers le trajet d'écoulement (7).

3. Injecteur de lubrifiant (1) selon la revendication 1 ou 2, **caractérisé en ce que** l'unité électronique (10) comporte un convertisseur analogique/numérique (30) qui convertit les données de mesure déterminées avec le capteur de débit (8) en une configuration binaire numérique (24) qui peut être transmise à une unité de commande (26) centrale d'un système de lubrifiant (23) par le biais d'une ligne d'alimentation électrique (25), de préférence à deux fils, prévue pour la bobine magnétique (14).

4. Injecteur de lubrifiant (1) selon l'une des revendications 1 à 3, **caractérisé en ce que** la soupape à pointeau (5) est soumise à une force de fermeture agissant dans la direction de fermeture.

5. Injecteur de lubrifiant (1) selon l'une des revendications 1 à 4, **caractérisé en ce qu'**un clapet antiretour (12) est disposé entre le capteur de débit (8) et la soupape à pointeau (5), un ressort de soupape (13) du clapet antiretour (12) agissant de préférence simultanément pour la production de la force de fermeture sur la soupape à pointeau (5).

6. Injecteur de lubrifiant (1) selon l'une des revendications 1 à 5, **caractérisé en ce que** la soupape à pointeau (5) comporte un induit (15) disposé dans un champ électromagnétique d'une bobine magnétique (14), la bobine magnétique (14) étant disposée dans un corps de bobine (16) qui est rendu étanche par rapport au lubrifiant et qui comporte de préférence une culasse (17) ouverte en direction de l'induit (15), un support de bobine (18) étant introduit dans l'ouverture de la culasse (17).

7. Injecteur de lubrifiant (1) selon la revendication 6, **caractérisé en ce qu'**au moins un élément d'étanchéité (19) intérieur et un élément d'étanchéité (20) extérieur sont prévus entre le support de bobine (18) et la culasse (17), les éléments d'étanchéité (19, 20) étant de préférence constitués sous forme de joints toriques.

8. Injecteur de lubrifiant (1) selon l'une des revendications 6 à 7, **caractérisé en ce que** le corps de bobine (16) est constitué sous forme annulaire, le trajet d'écoulement (7) traversant le milieu du corps de bobine (16) de forme annulaire.

9. Injecteur de lubrifiant (1) selon l'une des revendications 6 à 8, **caractérisé en ce que** des éléments chauffants (21) destinés à chauffer le lubrifiant sont prévus dans le corps de bobine (16).

10. Injecteur de lubrifiant (1) selon l'une des revendications 1 à 9, **caractérisé en ce que**, pour la mesure de la température du lubrifiant, un capteur de température (29) est prévu dans l'injecteur de lubrifiant (1).

11. Injecteur de lubrifiant (1) selon l'une des revendications 1 à 10, **caractérisé en ce que** l'ouverture de distribution (4) constitue un obturateur d'écoulement (22).

12. Système de lubrifiant (23) pour une machine à piston (2), avec une multiplicité d'injecteurs de lubrifiant (1) selon l'une des revendications 1 à 11, le système de lubrifiant (23) comportant un traitement de pression (27) central pour un lubrifiant et un système de conduite de pression (28) pour le lubrifiant raccordé aux conduites d'amenée de lubrifiant (3) des injecteurs de lubrifiant (1), et chaque injecteur de lubrifiant (1) étant raccordé à une unité de commande (26) centrale par le biais d'au moins une ligne d'alimentation électrique (25).

13. Système de lubrifiant (23) selon la revendication 12, **caractérisé en ce que** les unités électroniques (10) comportent un convertisseur analogique/numérique (30) qui convertit les données de mesurées déterminées en une configuration binaire numérique (24) pour une transmission vers l'unité de commande (26) centrale.

14. Système de lubrifiant (23) selon la revendication 13, **caractérisé en ce que** les unités électroniques (10) des injecteurs de lubrifiant (1) utilisent comme ligne de communication la ligne d'alimentation électrique (25) de préférence à deux fils de l'injecteur de lubrifiant (1) pendant les phases passives de l'injecteur de lubrifiant (1) respectif.

15. Procédé destiné à la fourniture de lubrifiant au niveau d'une multiplicité de points de lubrification d'une machine à piston (2) avec un système de lubrifiant selon l'une des revendications 12 à 14, **caractérisé en ce que** l'unité de commande (26) centrale active et désactive sélectivement, de façon commandée dans le temps, la multiplicité d'injecteurs de lubrifiant (1) sur la base des données de mesure obtenues par les capteurs de débit (8) en vue de la distribution d'une quantité définie de lubrifiant.

16. Procédé selon la revendication 15, **caractérisé en ce que**, lors de la détection d'un défaut de fonctionnement ou respectivement d'une quantité erronée d'un injecteur de lubrifiant (1), l'unité de commande (26) centrale compense le défaut de fonctionnement ou respectivement la quantité erronée par l'augmentation ou respectivement la réduction de la quantité de lubrifiant distribuée par au moins un autre injecteur de lubrifiant (1).

17. Procédé selon la revendication 15 ou 16, **caractérisé en ce que** l'unité de commande (26) centrale adapte individuellement la quantité de lubrifiant distribuée par chaque injecteur de lubrifiant (1) en fonction de conditions de charge et/ou processus de rodage actuels.

18. Procédé selon l'une des revendications 15 à 17, **caractérisé en ce que**, pendant des phases d'arrêt, l'unité de commande (26) centrale chauffe activement le lubrifiant contenu dans les injecteurs de lubrifiant (1).

19. Procédé selon la revendication 18, **caractérisé en ce que** le chauffage s'effectue par le biais d'éléments chauffants (21) prévus dans les injecteurs de lubrifiant (1) et/ou **en ce que**, pour le chauffage, une bobine magnétique (14) prévue dans l'injecteur de lubrifiant (1) pour l'actionnement d'une soupape à pointeau (5) est alimentée en courant au-dessous du seuil d'activation.

20. Procédé selon l'une des revendications 15 à 19, **caractérisé en ce que** les mouvements de soupape dans des injecteurs de lubrifiant (1) sont déterminés et surveillés par l'unité de commande (26) centrale par l'analyse de la rétroaction du courant d'induit, l'unité de commande (26) centrale analysant de préférence de façon combinée le mouvement de soupape de chaque injecteur de lubrifiant (1) et/ou les données de mesure des capteurs de débit (8) et/ou l'allure dans le temps des pointes de pression dans le système de conduite de pression (28) et/ou d'autres données de capteurs du système de lubrifiant et/ou de la machine à piston.
